# EUROPEAN PATENT SPECIFICATION

(11) **EP 0 461 294 B1**
(45) Date of publication and mention of the grant of the patent: **26.01.1994**
(21) Application number: 90111310.0
(22) Date of filing: 15.06.1990
(51) Int. Cl.: F16K 5/06, F16K 5/02, F16K 5/04

(54) **Stop valve**
Absperrventil
Soupape d'arrêt

(43) Date of publication of application: 18.12.1991
(73) Proprietor: BROEN ARMATUR A/S, DK-5610 Assens (DK)
(72) Inventor: Bjarnason, Thorsteinn, DK-5230 Odense M (DK); Haider, Erik Franz, S-79200 Mora (SE)
(74) Representative: Christensen, Aksel

(56) References cited:
- DE-B- 1 209 381
- GB-A- 1 067 419
- US-A- 3 228 652

## Description

### TECHNICAL FIELD

The present invention relates to a stop valve of the kind set forth in the preamble of claim 1.

Such a stop valve is known from GB-A-1 067 419.

### BACKGROUND ART

In stop valves of this kind, the requisite means for limiting the angular movements of the valve member have presented problems both during manufacture and during actual operation. Thus, in many known valves of this kind, these means necessitate complicated machining operations, and may in many cases compromise the correct functioning of the valve member itself.

### DISCLOSURE OF THE INVENTION

It is the object of the present invention to provide a stop valve of the kind initially referred to, in which the means for limiting the angular rotation of the valve member are shaped in such a manner, that they do not cause any substantial complication in the manufacture of the valve, and this object is achieved with a stop valve of the kind initially referred to, which according to the present invention exhibits the features set forth in the characterizing clause of claim 1. In this manner it is achieved, partly that those parts, on which the stop surfaces are formed, viz. the turning member and the second valve-housing part, may be produced using simple machining operations, in part that the angular limiting function is kept at a distance from the valve member, so that it does not disturb the functioning of the latter.

Advantageous embodiments of the stop valve according to the present invention, the effects of which - as far as they are not obvious - are explained in more detail in the following detailed portion of the present specification, are set forth in claims 2-4.

### BRIEF DESCRIPTION OF THE DRAWINGS

In the following detailed specification, the present invention will be explained in more detail with reference to an embodiment of a stop valve according to the present invention in the form of a ball-cock valve shown in the drawings, in which
Figure 1 is a longitudinal section through the valve with the ball cock in the open position, and
Figure 2 shows the valve spindle viewed in the direction of the arrow II in Figure 1.

### DESCRIPTION OF THE PREFERRED EMBODIMENT

The stop valve shown in the drawing comprises in a manner known in principle a valve housing 1, in which a ball cock 2 is rotatably supported in such a manner, that it can open or close the connection between an inlet 3 and an outlet 4.

At this stage it will be noted that the inlet 3 and the outlet 4 in certain cases may exchange roles, but for ease of understanding, the part having the reference number 3 will in the following description be termed an inlet, while the part with the reference number 4 will be termed an outlet.

The valve housing 1 consist of two parts, viz. a first valve-housing part 1a, in which the inlet 3 is situated, and a second valve-housing part 1b, in which the outlet 4 is situated.

Between the inlet and the outlet, the ball cock 2 is situated in a valve chamber 5 connected to the inlet and the outlet through an inlet opening 6 and an outlet opening 7, respectively, situated in the first valve-housing part 1a and the second valve-housing part 1b, respectively.

The inlet opening 6 is surrounded by a first valve seat 8, while the outlet opening 7 is surrounded by a second valve seat 9, said valve seats in the example shown both being constituted by inserted sealing rings consisting of e.g. PTFE (polytetrafluoroethylene) or other material suited to the particular use.

The ball cock 2 may be turned about its axis of rotation 2a by means of a valve spindle 10 sealingly supported in a spindle opening 11 situated in one side wall - in the example shown the upper side wall - of the first valve-housing part 1a. On the part lower-most on the drawing the valve spindle 10 has a transversely extending drive key 10b, engaging with a likewise transversely extending drive slot 2c situated in the upper part of the ball cock 2. On its upper part, the valve spindle 10 carries a tranverse screwdriver slot 10c, so the valve spindle may be turned by means of e.g. a screwdriver. In addition to or instead of the screwdriver slot 10c, the valve spindle may in this location have an e.g. hexagonal key recess for engagement with a hexagonal key.

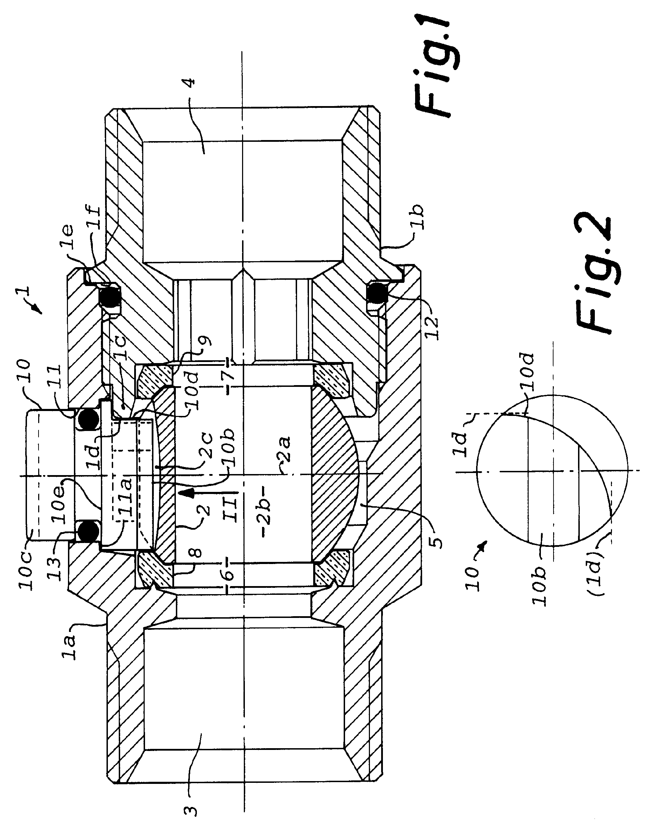

In order to limit the angular rotation of the ball cock 2 to the rotational interval of 90° extending from the position of the ball cock 2 shown in Figure 1 to another position (not shown), in which the bore 2b of the ball cock extends at right angles to the plane of the drawing, the second housing part 1b is provided with an annular stop projection 1c projecting into the valve chamber 5, the likewise annular end surface 1d of the projection 1c constituting an abutment surface for a curved stop surface 10d formed on the valve spindle 10. As may be seen from the drawing, the stop projection 1c lies radially outside of the second valve seat 9 and projects through a distance beyond the latter into the valve chamber 5, so that it surrounds that part of the ball cock 2 lying nearest the outlet 4. In this manner, the stop projection 1c will project so far towards the axis 2a, that the stop surface 10d may be formed by removing material, such as by an excentric turning operation, from the valve spindle 10; thus, it is not necessary to form special stop projections on the latter.

In order to achieve an accurate positioning of the annular end surface 1d in relation to the valve spindle 10, so that the limits for the angular rotation of the ball cock 2 are set accurately, an abutment surface 1e is formed in that part of the first valve-housing part 1a facing towards the right, against which abutment surface 1e an abutment flange 1f on the second valve-housing 1b abuts, when the latter is fully inserted or screwed into the first valve-housing part 1a.

The valve shown in the drawing may be dismantled by un-screwing the second housing part 1b from the first housing part 1a, i.e. moved towards the right in the drawing, after which the ball cock 2 - provided that it is positioned in the open position shown - may be pulled out of engagement with the drive key on the valve spindle 10, after which the latter may be pushed into the valve chamber 5 and removed from there through the right-hand end of the first valve-housing part 1a, now being open. The assembling of the valve will, of course, be done in the opposite directions and in reverse sequence. In order that the valve spindle 10 may be held in its operating position shown in the first valve-housing part 1a, a bearing surface 11a is formed around the inner side of the spindle opening 11, said bearing surface cooperating with an outwardly facing bearing surface 10e on the valve spindle 10.

In the exemplary embodiment shown, the stop valve according to the present invention constitutes a valve with a straight run, but the present invention may also be applied to stop valves of the type not in-frequently being termed "angle cocks". If so, the bore in the ball cock has, of course, to extend through 90° from an inlet at right angles to the axis of rotation to an outlet aligned with the latter. Persons skilled in this particular art will know how such an angle cock is to be constructed using the principles of the present invention. Further, the principles of the present invention may also be applied to stop valves other than ball-cock valves, e.g. plug valves with straight or tapered plugs, or so-called butterfly valves.

The requisite sealing between the two valve-housing parts 1a and 1b is provided by means of an O-ring 12, whilst the valve spindle 10 is sealed in the spindle opening 11, likewise by means of an O-ring, here having the reference number 13.

## Claims

1. A valve comprising
a) a valve housing (1) consisting of at least two parts (1a, 1b) and in which in the assembled state of the valve housing there are
a1) a first connecting duct (3),
a2) a second connecting duct (4), and
a3) a valve chamber (5) situated between the first (3) and the second (4) connecting ducts, said valve chamber being connected with the first connecting duct through a first opening (6) surrounded by a first valve seat (8) and with the second connecting duct through a second opening (7), whereas a spindle opening (11) extends from the valve chamber out through the wall of the valve housing between the first and the second connecting duct, and
b) a valve member (2) with a bearing surface for cooperation with at least one valve seat (8, 9), said valve member being adapted to be rotated about an axis (2a) extending transversely of at least the opening (7, 6) surrounded by the valve seat (9, 8), said bearing surface being substantially a surface of rotation about said axis (2a), said rotation being achieved by means of
c) a turning member (10) connected (10b, 2c) with the valve member (2) and extending sealingly (13) through the spindle opening (11), and in or outside of the latter having an engagement portion (10c), with which it may be turned, whereas
d) at least one eccentric stop surface (10d) is shaped on the turning member (10) or the valve member (2), said stop surface cooperating with a stop surface (1d) formed in the valve housing (1) to limit the angle, through which the valve member (2) may be turned,
**characterized** in
e) that the stop surface formed in the valve housing constitutes an end surface (1d) on said second valve-housing part (1b), the latter being inserted or screwed into the first valve-housing (1a) with said end surface (1d) facing the turning axis (2a) of the turning member (10).

2. A valve according to claim 1, **characterized** in that said end surface (1d) constitutes the end surface on an annular projection (1c) extending from the remainder of the second valve-housing part (1b) into the valve chamber (5).

3. A valve according to claim 1 or claim 2, **characterized** by abutment surfaces (1e, 1f) formed on the first (1a) and the second (1b) valve-housing part, said abutment surfaces cooperating to determine the mutual position of the two valve-housing parts when the second valve-housing (1b) is fully inserted or screwed into the first valve-housing part (1a).

4. A valve according to any one or any of the claims 1-3 and of the kind in which the turning member (10) and valve member (2) during normal operation are coupled to each other by means of coupling members (10b, 2c) of the kind that may be disengaged by mutual movement of the two parts substantially at right angles to their common operational turning axis (2a), **characterized** in
a) that the turning member has a bearing surface (10e) extending substantially radially and facing away from the valve member (2), said bearing surface being adapted to cooperate with a bearing surface (11a) formed in the first valve-housing part (1a) around the inner side of the spindle opening (11) and
b) that the eccentric stop surface or surfaces (10d) is/are formed on that part of the turning member (10) which is situated between the latter's bearing surface (10e) and that one (10b) of said coupling members (10b, 2c) which is formed in or on the turning member.

## Patentansprüche

1. Ventil mit
a) einem Ventilgehäuse (1), das wenigstens aus zwei Teilen (1a, 1b) besteht und in dem im zusammengebauten Zustand des Ventilgehäuses
a1) eine erste Verbindungsleitung (3),
a2) eine zweite Verbindungsleitung (4) und
a3) eine Ventilkammer (5) angeordnet sind, die zwischen der ersten (3) und der zweiten (4) Verbindungsleitung liegt, wobei die Ventilkammer (5) mit der ersten Verbindungsleitung durch eine erste Öffnung (6) verbunden ist, die von einem ersten Ventilsitz (8) umgeben ist und mit der zweiten Verbindungsleitung durch eine zweite Öffnung (7), wohingegen zwischen der ersten und zweiten Verbindungsleitung sich eine Spindelöffnung (11) von der Ventilkammer aus durch die Wand des Ventilgehäuses nach außen erstreckt; und
b) einem Ventilteil (2) mit einer Lagerfläche zum Zusammenwirken mit wenigstens einem Ventilsitz (8, 9), wobei dieses Ventilteil so ausgelegt ist, daß es um eine Achse (2a) verdreht werden kann, die sich quer zu wenigstens einer der Öffnung (7, 6) erstreckt, die vom Ventilsitz (9, 8) umgeben ist, wobei die Lagerfläche im wesentlichen eine Drehfläche um die Achse (2a) ist und wobei die Drehung erzielt wird mit Hilfe von
c) einem Drehteil (10), das mit dem Ventilteil (2) verbunden ist (10b, 2c) und das sich abgedichtet (13) durch die Spindelöffnung (11) erstreckt und das innerhalb - oder außerhalb - der Spindelöffnung einen Eingriffsteil (10c) hat, mit dessen Hilfe es verdreht werden kann, wohingegen
d) am Drehteil (10) oder am Ventilteil (2) wenigstens eine, exzentrische Anschlagfläche (10d) angeformt ist, die mit einer Anschlagfläche (1d) zusammenwirkt, die am Ventilgehause (1) ausgebildet ist, um den Winkel zu begrenzen, um den das Ventilteil (2) verdreht werden kann,
dadurch **gekennzeichnet,** daß
e) die Anschlagfläche, die im Ventilgehäuse ausgebildet ist, durch eine Stirnfläche (1d) am zweiten Ventilgehäuseteil (1b) gebildet wird, wobei dieses in das erste Ventilgehäuseteil (1a) eingeschoben oder eingeschraubt wird, wobei die Stirnfläche (1d) auf die Drehachse (2a) des Drehteiles (10) zuweist.

2. Ventil nach Anspruch 1, dadurch gekennzeichnet, daß die Stirnfläche (1d) durch die Stirnfläche eines ringförmigen Vorsprunges gebildet wird, der sich vom Rest des zweiten Ventilgehäuseteiles (1b) aus in die Ventilkammer (5) hinein erstreckt.

3. Ventil nach einem der Ansprüche 1 oder 2, gekennzeichnet durch Anschlagflächen (1e, 1f), die am ersten (1a) und am zweiten (1b) Ventilgehäuseteil ausgebildet sind, wobei diese Anschlagflächen zusammenwirken, um die gegenseitige Stellung der beiden Ventilgehäuseteile dann zu bestimmen, wenn das zweite Ventilgehäuseteil (1b) voll in das erste Ventilgehäuseteil (1a) eingeschoben oder eingeschraubt ist.

4. Ventil nach einem oder mehreren der Ansprüche 1 bis 3 von der Bauart, bei der das Drehteil (10) und das Ventilteil (2) während des normalen Betriebes miteinander mit Hile von Kupplungsteilen (10b, 2c) so verbunden sind, daß sie durch eine gegenseitige Bewegung der beiden Teile im wesentlichen in rechten Winkeln zu ihren gemeinsamen Dreh-Betriebsachsen (2a) gelöst werden können, dadurch gekennzeichnet,
a) daß das Drehteil eine Anlagefläche (10e) hat, die sich im wesentlichen radial erstreckt und vom Ventilteil (2) wegweist, wobei diese Anlagefläche so ausgelegt ist, daß sie mit einer Anlagefläche (11a) zusammenwirkt, die rund um die Innenseite der Spindelöffnung (11) im ersten Ventilgehäuseteil (1a) ausgebildet ist und
b) daß die exzentrische Anschlagfläche (10d) oder die exzentrischen Anlageflächen (10d) an demjenigen Teil des Drehteiles angeformt ist bzw. sind, das zwischen der Anlagefläche (10e) des Drehteiles und demjenigen (10b) der Kupplungsteile (10b, 2c) liegt, das im oder am Drehteil angeformt ist.

## Revendications

1. Soupape comprenant
a) une boite de soupape (1) consistant d'au moins deux pièces (1a, 1b) et dans laquelle dans l'état assemblè de la boite de soupape il y a
a1) une première conduite de communication (3)
a2) une seconde conduite de communication (4) et
a3) une chambre de soupape (5) située entre la première (3) et la seconde (4) conduite de communication, ladite chambre de soupape étant associée à la première conduite de communication par un premier orifice (6) entouré d'un premier siege de soupape (8) et à la seconde conduite de communication par un second orifice (7), tandis qu'un trou (11) s'étend de la chambre de soupape en dehors à travers la paroi de la boite de soupape entre la première et la seconde conduite de transmission, et
b) un élément de soupape (2) avec une surface de portée pour coopération avec au moins un siege de soupape (8, 9), ledit élément de soupape étant adapté à être tourné autour d'un axe (2a) s'étendant transversalement àu moins de l'orifice (7, 6) entouré du siege de soupape (9, 8), ladite surface de portée étant essentiellement une surface de rotation sur son axe (2a), ladite rotation étant obtenue par
c) un élément tournant (10) associé (10b, 2c) à l'élément de soupape (2) et s'étendant étanchement (13) à travers le trou (11), et dans ou en dehors de celui-ci ayant une portion d'embrayage (10c), au moyens de qui il peut être tourné, tandis
d) qu'au moins une surface d'arrêt excentrique (10d) est formée sur l'élément tournant (10) ou l'élément de soupape (2), ladite surface d'arrêt coopérant avec une surface d'arrêt (1d) formée dans la boite de soupape (1) pour limiter l'angle, par lequel l'élément de soupape (2) peut être tourné,
caractérisée par le fait que
e) la surface d'arrêt formée dans la boite de soupape constitue une surface terminale (1d) sur ladite pièce de boite de soupape (1b), celle-ci étant intercalée ou vissée dans la première boite de soupape (1a) avec la surface terminale (1d) étant exposée à l'axe tournant (2a) de l'élément tournant (10).

2. Soupape selon la revendication 1, caractérisée par le fait que la surface terminale (1d) constitue la surface terminale d'une saillie annulaire (1c) s'étendant du reste de la seconde pièce de boite de soupape (1b) dans la chambre de soupape (5).

3. Soupape selon la revendication 1 ou la revendication 2, caractérisée par des butées (1e, 1f) formées sur la première (1a) et la seconde (1b) pièce de boite de soupape, lesdits butées coopérant pour déterminer la position mutuelle des deux pièces de boite de soupape quand la seconde boite de soupape (1b) est complètement intercalée ou vissée dans la première pièce de boite de soupape (1a).

4. Soupape selon quelconque des revendications 1-3 et du type, dans lequel l'élément tournant (10) et l'élément de soupape (2) pendant opération normale sont accouplés l'un à l'autre au moyens de membres d'accouplement (10b, 2c) du type qui peut être dégagé par mouvement mutuel des deux éléments essentiellement à l'angle droit par rapport à leur axe tournant de manoeuvre (2a) en commun,
caractérisée par le fait que
a) l'élément tournant a une surface de portée (10e) qui s'étend essentiellement radialement et est détournée de l'élément de soupape (2), ladite surface de portée étant adaptée à coopérer avec une surface de portée (11a) formée dans la première pièce de boite de soupape (1a) autour le côté intérieur du trou (11) et
b) la ou les surfaces d'arrêt excentriques (10d) est/sont formée(s) sur la partie de l'élément tournant (10) qui est situé entre la surface de portée de celui-ci (10e) et celui (10b) des éléments d'embrayage (10b, 2c) qui est formé dans ou sur l'élément tournant.
